# EUROPÄISCHE PATENTANMELDUNG

(11) **EP 3 812 727 A2**
(43) Veröffentlichungstag der Anmeldung: **28.04.2021**
(21) Anmeldenummer: 20206909.2
(22) Anmeldetag: 02.12.2019
(51) Int. Cl.: G01L 1/20, G01L 17/00, G01L 19/00, G01M 17/02, G01N 27/22

(54) **KONTROLLSYSTEM ZUR MESSUNG UND/ODER VERARBEITUNG VON GEMESSENEN DRUCK- UND/ODER FEUCHTIGKEITSWERTEN**

(30) Priorität: 07.12.2018 DE 102018131401
(62) Teilanmeldung aus: 19812890.2
(71) Anmelder: B-Horizon GmbH, 93161 Sinzing (DE)
(72) Erfinder: Kabany, Mohammad, 93053 Regensburg (DE)
(74) Vertreter: Peters, Andreas

(57) **Zusammenfassung**

Die Erfindung betrifft ein Sensorsystem zur Messung und/oder Verarbeitung von gemessenen Druck- und/oder Feuchtigkeitswerten, umfassend zumindest einen Sensor zur Messung von Druck und/oder Feuchtigkeit sowie zumindest einer Verarbeitungseinheit, welche dazu eingerichtet und dafür vorgesehen ist den Sensor anzusteuern und/oder von dem Sensor gemessene Daten zu speichern und/oder zu verarbeiten. Außerdem umfasst das Sensorsystem zumindest eine Auswertungseinheit, welche die von der Verarbeitungseinheit an sie weitergeleitete Daten auswertet und anschießend diese Daten oder einen aus den Daten generierten Datensatz an eine CPU, insbesondere drahtlos, weiterleitet, insbesondere wobei es sich bei der CPU um ein Fahrzeugsteuergerät handelt, wobei zumindest der Sensor, vorzugsweise jedoch auch die Verarbeitungseinheit, auf einem flexiblen und biegbaren Trägermaterial angeordnet sind, wobei das Trägermaterial dazu eingerichtet und dafür vorgesehen ist auf einer Oberfläche eines Nutzungsobjekts, insbesondere auf der Innenfläche eines Reifens, angeordnet zu werden.

## Beschreibung

Die vorliegende Erfindung betrifft ein Kontrollsystem zur Messung und/oder Verarbeitung von gemessenen Druck- und/oder Feuchtigkeitswerten dem Oberbegriff des Anspruchs 1.

Das hierbei vorgeschlagene Sensorsystem umfasst zumindest einen Sensor zur Messung von Druck und/oder Feuchtigkeit. Bei dem Sensor kann es sich um einen solchen handeln, welcher auf einem mechanischen, thermoelektrischen, resistiven, piezoelektrischen, kapazitiven, induktiven, optischen und/oder magnetischen Wirkprinzip beruht.

Zum Beispiel kann es sich bei dem hier vorgeschlagenen Sensor um einen Druck- und/oder einen Feuchtigkeitssensor handeln. Insbesondere kann es sich bei dem Sensor ebenso auch um einen Neigungssensor, einen Kraftsensor, einen CCD-Sensor, eine Fotozelle, einen Hallsensor oder um ein Thermoelement handeln.

Es können auch verschiedene Wirkprinzipien miteinander verbunden werden, sodass ein Sensor entsteht, welcher beispielsweise sowohl auf kapazitiven Wirkprinzipien beruht als auch auf einem optischen Wirkprinzip basiert.

Gemäß zumindest einer Ausführungsform umfasst das Sensorsystem zumindest eine Verarbeitungseinheit, welche dazu eingerichtet und dafür vorgesehen ist, den Sensor anzusteuern und/oder von dem Sensor gemessene Daten zu speichern und/oder zu verarbeiten.

Des Weiteren umfasst das Sensorsystem zumindest eine Auswertungseinheit, welche die von der Verarbeitungseinheit an sie weitergeleitete Daten auswertet, um anschließend diese Daten oder einen aus den Daten generierten Datensatz an eine CPU, insbesondere drahtlos, weiterleitet, insbesondere wobei es sich bei der CPU um ein Fahrzeugsteuergerät handelt.

Dabei kann die CPU Teil des Sensorsystems sein.

Erfindungsgemäß ist zumindest der Sensor, vorzugsweise jedoch auch die Verarbeitungseinheit, auf einem flexiblen und biegbaren Trägermaterial angeordnet, wobei das Trägermaterial dazu eingerichtet und dafür vorgesehen ist, auf einer Oberfläche eines Nutzungsobjekts, insbesondere auf der Innenfläche eines Reifens, angeordnet zu werden.

Bisher bekannte Trägermaterialien, insbesondere welche innerhalb eines Reifens angeordnet werden, sind nämlich weder flexibel noch biegbar aufgebracht, sondern zum Beispiel in Form einer Klebeschicht und/oder eines Substrats. Es wird hier jedoch nunmehr vorgeschlagen, anstatt eines derartigen nicht flexiblen und nicht biegbaren Trägermaterials ein solches anzubieten, welches gerade flexible und biegbare Eigenschaften aufweist.

"Flexibel" heißt in diesem Zusammenhang, dass das Trägermaterial zumindest stellenweise biegsam und damit elastisch ist.

Das Trägermaterial passt sich daher an die Form der Innfläche des Reifens an. Vorzugsweise ist das Trägermaterial auf der Innenfläche des Reifens direkt oder indirekt angeordnet. Bei direkter Anordnung ist das Trägermaterial in direktem Kontakt mit einem Gummi des Reifens.

Gemäß zumindest einer Ausführungsform fasst das Sensorsystem zur Messung und/oder Verarbeitung von gemessenen Druck- und/oder Feuchtigkeitswerten zumindest einen Sensor zur Messung von Druck und/oder Feuchtigkeit sowie zumindest einer Verarbeitungseinheit, welche dazu eingerichtet und dafür vorgesehen ist, den Sensor anzusteuern und/oder von dem Sensor gemessene Daten zu speichern und/oder zu verarbeiten.

Darüber hinaus umfasst das Sensorsystem zumindest eine Auswertungseinheit, welche die von der Verarbeitungseinheit an sie weitergeleitete Daten auswertet und anschließend diese Daten oder einen aus den Daten generierten Datensatz an eine CPU insbesondere drahtlos weiterleitet, insbesondere wobei es sich bei der CPU um ein Fahrzeugsteuergerät handelt, wobei erfindungsgemäß zumindest der Sensor, vorzugsweise jedoch auch die Verarbeitungseinheit, auf einem flexiblen und biegbaren Trägermaterial angeordnet sind, wobei das Trägermaterial dazu eingerichtet und dafür vorgesehen ist, auf eine Oberfläche eines Nutzungsobjekts, insbesondere auf die Innenfläche eines Reifens, angeordnet zu werden.

Gemäß zumindest einer Ausführungsform handelt es sich bei dem Trägermaterial um einen Textilstoff, insbesondere um einen Webstoff.

Bei einem Webstoff handelt es sich im Sinne der Erfindung daher um ein Gewebe, welches manuell oder maschinell auf Basis von einzelnen Fäden gewebt wurde.

Zum Beispiel sind in dem Webstoff elektrische Leiterbahnen zur elektrischen Kontaktierung des Sensors und der Verarbeitungseinheit eingewoben. Die elektrischen Leiterbahnen können in dem Gewebe daher zusätzlich neben den üblichen Fasern und Gewebesträngen integriert sein oder aber einzelne Gewebestränge, welche das Gewebenetz ausbilden, ersetzen.

Diese Leiterbahnen können daher eine elektrische Verbindung zwischen dem Sensor und der Verarbeitungseinheit darstellen. Auch können die Leiterbahnen eine elektrische Verbindung zwischen einer Batterie oder einem sonstigen Energieerzeugungselement zwischen dem Sensor und/oder dem Verarbeitungselement bilden.

Je nach Abstand und Eigenschaften der einzelnen Fäden (hochgedreht, bauschig, usw.) können ganz lockere Gewebe, wie ein Verbandgewebe oder Dichtgewebe wie Brokatstoff, entstehen, denn längselastisch werden Gewebe durch als Kettenfäden eingesetzte Gummifäden (mehr Bänder), oder Kräusel- und/oder Bauschgarne, verwendet, sie werden verspannt, verarbeitet und ziehen sich im Ruhezustand zusammen. Bauschgarne bestehen aus texturierten, also gekräuselten synthetischen Fasern. Die Kräuselung verändert die Eigenschaften der synthetischen Fasern. Die darauf gesponnenen Garne sind sehr elastisch und voluminös und haben eine gute Wärmedämmung.

Gemäß zumindest einer Ausführungsform ist das Trägermaterial in Form eines Trägerstreifens ausgebildet, sodass der Sensor und die Verarbeitungseinheit entlang der Streifenhauptausdehnung hintereinander angeordnet sind.

Die "Streifenhauptausdehnung" ist diejenige Längenabmessung und Längenrichtung des Trägermaterials, welche eine Haupterstreckungsrichtung darstellt. Verglichen mit der Länge des Trägermaterials in Richtung der Streifenhauptausdehnung ist daher eine Breite des Trägermaterials vernachlässigbar.

Zum Beispiel sind mehrere Sensoren hintereinander auf dem Trägermaterial entlang der Umfangsrichtung des Reifens angeordnet, wobei jeder der Sensoren separat den Druck im Reifen misst. Alternativ oder zusätzlich nimmt zumindest einer der Sensoren auf der Reifeninnenfläche angeordneten Sensoren von außerhalb des Reifens auf diesem wirkende Kräfte auf und misst diese. Hierzu kann der Sensor zum Beispiel in der Lage sein, dass eine Dehnung und/oder Stauchung, verursacht durch an eine Außenfläche des Reifens (zum Beispiel der Lauffläche) anliegende äußere Kraft, der Reifeninnenfläche wahrgenommen und gemessen wird. Zum Beispiel kann dann das Trägermaterial dehnbar und/oder flexibel ausgebildet sein, wobei eine Dehnung und/oder Stauchung des Trägermaterials Rückschlüsse über die auf die Außenfläche des Reifens wirkende Kraft (Kraftdauer, Krafthöhe in Newton etc.) zulässt. Hierzu kann eine Dehnung und/oder Stauchung der Reifeninnenfläche und/oder ein sich durch externe Kraft verändernder Innenluftdruck durch den Sensor gemessen werden. Die CPU der hier beanspruchten Vorrichtung kann dann über entsprechend in der CPU hinterlegt Algorithmen einen Kraftwert der äußeren Kraft zu einem bestimmten Messzeitpunkt aus den Dehnungs- und/oder Stauchungswerten der Reifeninnenfläche und/oder aus dem sich verändernden Reifeninnendruck ermitteln. Diese Messung kann zeitlich gleichzeitig oder jeweils zeitversetzt geschehen. Zum Beispiel nimmt jeder einen Druckwert am tiefsten und/oder höchsten Punkt des Reifens in Umlaufrichtung auf. Denkbar ist auch, dass zumindest ein Sensor einen Druckwert in einem Rotationsraster von weniger als 10 Grad und höchstens 30 Grad aufnimmt, sofern der Reifen rotiert wird.

Des Weiteren betrifft die vorliegende Erfindung eine Sensoranordnung zur Messung und/oder Verarbeitung von gemessenen Druck- und/oder Feuchtigkeitswerten.

Die beschriebene Sensoranordnung umfasst zumindest einen Sensor zur Messung von Druck und/oder Feuchtigkeit sowie zumindest einer Verarbeitungseinheit, welche dazu eingerichtet und dafür vorgesehen ist, den Sensor anzusteuern und/oder von dem Sensor gemessene Daten zu speichern und/oder zu verarbeiten.

Zumindest der Sensor, vorzugsweise jedoch auch die Verarbeitungseinheit sind auf einem flexiblen und biegbaren Trägermaterial angeordnet, wobei das Trägermaterial dazu eingerichtet und dafür vorgesehen ist, auf der Oberfläche des einen Nutzungsobjekts, insbesondere auf der Innenfläche eines Reifens angeordnet zu werden.

Die hierbei vorgeschlagene Sensoranordnung umfasst die gleichen vorteilhaften Ausgestaltungen und Vorteile wie das obig beschriebene Sensorsystem.

Das Sensorsystem unterscheidet sich von der Sensoranordnung insbesondere dadurch, dass das Sensorsystem zusätzlich die beschriebene CPU umfasst.

Des Weiteren betrifft die vorliegende Erfindung ein Kontrollsystem zur Messung und/oder Verarbeitung von gemessenem Druck- und/oder Feuchtigkeitswerten innerhalb eines Reifens, wobei das hier beschriebene Kontrollsystem einen zumindest teilweise aufgeblasenen Reifen, insbesondere einen Fahrzeugreifen, umfasst sowie zumindest ein Sensorsystem gemäß zumindest einer der obig ausgeführten Ausführungsformen, wobei das Trägermaterial auf der Innenfläche des Reifens, das heißt im Inneren des Reifens, angeordnet ist.

Zumindest einer der Sensoren ist zum Beispiel auf der Reifeninnenfläche angeordnet und misst von außerhalb des Reifens auf diesem wirkende Kräfte auf. Hierzu kann der Sensor zum Beispiel in der Lage sein, dass eine Dehnung und/oder Stauchung, verursacht durch an eine Außenfläche des Reifens anliegende äußere Kraft, der Reifeninnenfläche wahrgenommen und gemessen wird. Zum Beispiel kann dann das Trägermaterial dehnbar und/oder flexibel ausgebildet sein, wobei eine Dehnung und/oder Stauchung des Trägermaterials Rückschlüsse über die auf die Außenfläche des Reifens wirkende Kraft (Kraftdauer, Krafthöhe in Newton etc.) zulässt.

Das hier beschriebene Kontrollsystem weist daher die gleichen Vorteile und vorteilhaften Ausgestaltungen auf wie die obig beschriebene Sensoranordnung sowie das obig beschriebene Sensorsystem.

Bei dem Reifen handelt es sich daher vorzugsweise um einen Luftreifen, welcher pneumatisch aufgeblasen ist. Zum Beispiel ist der Reifen ein Fahrzeugreifen.

Gemäß zumindest einer Ausführungsform umfasst das Kontrollsystem zumindest ein Reifenventil, welches ein Teil des Reifens ist, wobei die Auswerteinheit an oder in das Reifenventil integriert verbaut ist.

Insbesondere kann vorgesehen sein, dass die Auswerteeinheit in einem Abdeckelement oder an ein Abdeckelement des Reifenventils integriert verbaut ist, sodass die Auswerteeinheit auf das Gewinde einer Ventilstange aufschraubbar ist. Bei dem Abdeckelement kann es sich um eine oder einen Teil von einer auf die Ventilstange aufbringbaren Ventilkappe des Ventils handeln.

Eine solche Ventilkappe umfasst daher in dieser Ausführungsform bereits die Verarbeitungseinheit.

Gemäß zumindest einer Ausführungsform umfasst das Kontrollsystem zumindest zwei Reifen, welche an einem Fahrzeug montierbar oder montiert sind, wobei in jedem der beiden Reifen zumindest eine Sensoranordnung nach zumindest einer der obig vorgestellten Ausführungsformen angeordnet ist und wobei alle Daten an die gemeinsame CPU übermittelt werden.

Vorzugsweise umfasst das Kontrollsystem nur eine einzige CPU, welche für alle Anordnungen zuständig ist.

Gemäß zumindest einer Ausführungsform übermittelt die Auswerteeinheit eine Drehposition des Sensors relativ zu einer Nullposition des Reifens an die CPU.

Bei der Nullposition kann es sich um eine vorher in die CPU und/oder in die Auswerteinheit und/oder Verarbeitungseinheit einprogrammierte Ausgangsdrehposition um die Hauptdrehachse des Reifens handeln. Bei der Nullposition kann es sich beispielsweise um eine solche Position handeln, bei der das obig beschriebene Reifenventil die größte Höhe zu einem Auflageboden erreicht. Der Auflageboden kann eine Straße sein, auf welcher der Reifen um die Achse drehend laufen kann.

Gemäß zumindest einer Ausführungsform wird jede Drehposition jedes Sensors an die CPU übermittelt, sodass die CPU zeitkontinuierlich oder zeitdiskret eine relative Position der Reifen untereinander erfasst und/oder eine Drehwinkelgeschwindigkeit, eine Drehbeschleunigung jedes der Reifen und/oder eine auf jeden der Reifen wirkende radiale/axiale Kraft erfasst. Auch können horizontale und/oder vertikale (Scher-)Kräfte sowie ein Reifenluftdruck erfasst werden.

Zum Beispiel werden die gemessenen Informationen als Eingangsinformation für Stabilitätskontrollsystem, ABS, Transkontrollsysteme zur Verbesserung und/oder Absicherung des Fahrverhaltens, insbesondere in Kurven, genutzt.

Insofern wird mittels der hier vorgeschlagenen CPU und deren vorzugsweise Drahtloskommunikation mit den einzelnen, vorzugsweise in den Reifenventilen verbauten Auswerteinheiten, vorgeschlagen, welche alle Reifen in einem technischen Überblick zusammenfasst.

Der Sensor und/oder die Verarbeitungseinheit und/oder die CPU können mittels einer Batterie oder einer Festnetzstromversorgung mit elektrischer Energie versorgt werden.

Alternativ oder zusätzlich ist die Erzeugung von elektrischer Energie zur Versorgung des Sensors und/oder Verarbeitungseinheit mittels sogenannter "Energy Harvesting" möglich.

Als Energy Harvesting (wörtlich übersetzt *Energie-Ernten*) bezeichnet man die Gewinnung kleiner Mengen von elektrischer Energie aus Quellen wie Umgebungstemperatur, Vibrationen oder Luftströmungen für mobile Geräte mit geringer Leistung. Die dafür eingesetzten Strukturen werden auch als Nanogenerator bezeichnet. Energy Harvesting vermeidet bei Drahtlostechnologien Einschränkungen durch kabelgebundene Stromversorgung oder Batterien.

Möglichkeiten des Energy Harvesting:
- Piezoelektrische Kristalle erzeugen bei Krafteinwirkung, beispielsweise durch Druck oder Vibration, elektrische Spannungen. Diese Kristalle können an oder auf dem Trägermaterial angeordnet sein;
- Thermoelektrische Generatoren und pyroelektrische Kristalle gewinnen aus Temperaturunterschieden elektrische Energie. Diese Generatoren können an oder auf dem Trägermaterial angeordnet sein;
- Über Antennen kann die Energie von Radiowellen, eine Form von elektromagnetischer Strahlung, aufgefangen und energetisch verwendet werden. Ein Beispiel dafür sind die passiven RFIDs. Diese Antennen können an oder auf dem Trägermaterial angeordnet sein;
- Photovoltaik, elektrische Energie aus der Umgebungsbeleuchtung;
- Osmose.

Zum Beispiel ist auch eine solches Energiespeicher- und/oder Energieerzeugungselement auf dem Trägermaterial angeordnet, um den Sensor und/oder die Verarbeitungseinheit mit elektrischer Energie zu versorgen.

Ein Energiespeicher der Vorrichtung kann Teil einer Verarbeitungseinheit sein. Hierzu können eine oder mehrere der Verarbeitungseinheiten einen solchen Energiespeicher (lokale Energiespeicher) aufweisen. Zum Beispiel weisen nur eine oder einige der Verarbeitungseinheiten einen solchen Energiespeicher auf, sodass eine dieser Verarbeitungseinheiten eine andere Verarbeitungseinheit (nämlich eine solche, welche keinen Energiespeicher aufweist) mit elektrischer Energie versorgt.
Auch ist denkbar, dass die Energiespeichereinheit(en) der Verarbeitungseinheit(en) die CPU mit elektrischer Energie ganz oder teilweise versorgt. Zum Beispiel kann so die CPU an keine weiteren Energiespeicher und/oder Energieversorgungsleitungen angeschlossen sein.

Über das oben genannte Energy Harvesting kann zumindest einer der Energiespeicher geladen werden.

Die Energieübertragung zwischen den Sensoren und/oder den Verarbeitungseinheiten und/oder der CPU kann ganz oder teilweise drahtlos erfolgen.

Zu der drahtlosen Energieübertragungen im Nahfeld, auch als nicht strahlende Kopplung bezeichnet, zählt beispielsweise die induktive Kopplung, basierend auf dem magnetischen Fluss. Häufig wird die Bezeichnung der drahtlosen Energieübertragung synonym für die induktive Energieübertragung verwendet, da diese in praktischen Anwendungen eine dominante Rolle einnimmt. Bei der nicht strahlenden Kopplung im Nahfeld spielen Wellenphänomene keine Rolle.

Beispielsweise geschieht die drahtlose Energieübertragung zwischen den einzelnen Elementen mittels induktiver Kopplung, resonanter induktiver Kopplung und/oder kapazitiver Kopplung.

Zum Beispiel ist der Sensor wie folgt aufgebaut und umfasst zumindest einen Kondensator mit zumindest zwei Elektroden, welche, insbesondere in einer horizontalen Richtung entlang eines und auf einem, insbesondere dem, insbesondere flexiblem, Trägermaterial zueinander angeordnet sind, wobei zwischen den Elektroden zumindest eine dielektrische Schicht angeordnet ist.

Der Sensor ist dadurch gekennzeichnet, dass auf einer dem Trägermaterial abgewandten Seite zumindest einer Elektrode und/oder der dielektrischen Schicht zumindest stellenweise zumindest eine zumindest teilweise flüssigkeitsdurchlässige und/oder flüssigkeitsabsorbierende Feuchteschicht angeordnet ist, wobei somit die zumindest eine Elektrode und/oder die dielektrische Schicht in einer Querrichtung zwischen dem Trägermaterial und der Feuchteschicht angeordnet sind, sodass sich eine Kapazität durch die auf die dielektrische Schicht zumindest teilweise treffende Flüssigkeit zumindest teilweise verändert, wobei eine Verarbeitungseinheit dazu eingerichtet und dafür vorgesehen ist, diese Änderung zu messen und/oder zu speichern, sodass ein kapazitiver Feuchtesensor entsteht.

Zum Beispiel sind in einem Reifen zwei oder mehr Verarbeitungseinheiten und/oder zwei oder mehr Verarbeitungseinheiten verschiedener Reifen kommunizieren miteinander.

Denkbar ist, dass die Vielzahl von Verarbeitungseinheiten ein Verarbeitungsnetzwerk ausbilden, wobei die Erfassung, Verarbeitung und/oder Weitergabe der Sensordaten und/oder der Verarbeitungsdaten eines jeden Sensors und/oder einer jeden Verarbeitungseinheit durch zumindest eine Steuerungseinrichtung (Master) gesteuert wird. Die Steuerungseinheit kann identisch mit der oben beschriebenen CPU sein.

Es ist jedoch auch möglich, dass eine oder mehrere der Verarbeitungseinheiten den Master darstellen, welcher die übrigen Verarbeitungseinheiten (Slave) und/oder die übrigen Sensoren (Slave) steuern.

Zum Beispiel kann eine der Verarbeitungseinheiten und/oder die CPU nach Inbetriebnahme der Vorrichtung (zum Beispiel nach einem Anschalten der Vorrichtung), solche Sensoren auswählen, welche für eine vorgebbare Nutzungsdauer in Betrieb genommen werden. Alternativ können auch alle oder einige Sensoren in Betrieb genommen werden, dann jedoch ist vorstellbar, dass eine Verarbeitungseinheit und/oder die CPU, insbesondere zum Zwecke der Energieersparnis, nur Daten einer vorgegebenen Anzahl (also weniger als alle Sensoren) von Sensoren an die CPU weiterleitet (Filterung).

Diese Master-Verarbeitungseinheit kann vorzugsweise als einzige Einheit mit der CPU kommunizieren.

Weiter alternativ oder zusätzlich ist vorstellbar, dass eine oder alle Verarbeitungseinheiten und/oder ein Sensor (Slave oder Master) direkt mit der CPU kommunizieren.

Gemäß zumindest einer Ausführungsform ist das Verarbeitungsnetzwerk mittels zumindest eines VLAN-Switches in zumindest zwei, nur logisch voneinander getrennte, Netzwerksegmente (VLANs) unterteilbar und wobei jedes der Erfassungselemente in Abhängigkeit von der Ansteuerung durch einen VLAN-Switch und/oder der Steuerungseinrichtung und somit durch jedes der Netzwerksegmente ansteuerbar ist.

Wird zum Beispiel eine sehr große Fläche (zum Beispiel ein Textil) mit einer Vielzahl von hier beanspruchten Sensoren und Verarbeitungseinheiten bestückt, können in besonders einfacher Art und Weise dann einzelne Verarbeitungseinheiten und/oder Sensoren kategorisiert werden (nach verschiedenen Prioritäten etc.). Es wird somit in einer Ausführungsform statt einer physikalischen Netzwerkunterteilung eine "virtuelle", das heißt VLAN-Unterteilung gewählt. Dies gewährleistet nämlich, dass auf Veränderungen in der Kategorisierung der Verarbeitungseinheiten und/oder Sensoren besonders schnell und ohne aufwendige Umbauarbeiten reagiert werden kann.

Gemäß zumindest einer Ausführungsform umfasst das Kontrollsystem zumindest ein Verarbeitungsnetzwerk, wobei mittels zumindest eines VLAN-Switches des Verarbeitungsnetzwerks, dieses in zumindest zwei, nur logisch voneinander getrennte, Netzwerksegmente (VLAN) unterteilbar ist, und wobei jeder Verarbeitungseinheiten und/oder jeder der Sensoren in Abhängigkeit von der Ansteuerung durch den VLAN-Switch durch jedes der Netzwerksegmente ansteuerbar sind.

Dazu kann der VLAN-Switch in zumindest einem der Verarbeitungseinheiten und/oder Sensoren oder in einem separaten Bauteil verbaut sein.

Gemäß zumindest einer Ausführungsform wird mittels des VLAN-Switches eine Priorisierung der einzelnen Netzwerksegmente insbesondere im Hinblick auf deren Datenaustausch durchgeführt.

Gemäß zumindest einer Ausführungsform ist jeder Verarbeitungseinheit und/oder jedem Netzwerksegment zumindest eine VLAN-ID zugeordnet, wobei über jede der VLAN-IDs zumindest ein Sensor oder eine andere Verarbeitungseinheit ansteuerbar ist. Einzelne Sensoren und/oder einzelne Verarbeitungseinheiten können ein eigenes Sub-Netzwerk bilden.

Um über Netzwerkgrenzen zu kommunizieren, werden im Stand der Technik statische projektdynamische Routen eingesetzt. Dieses Modell der Trennung ist klar und übersichtlich und wurde über Jahre angewandt. Dies hat jedoch die Nachteile, dass Broadcastanforderungen im Subnetz für alle Teilnehmer sichtbar sind und von den Endpunkten betrachtet werden müssten. Mit anderen Worten, konnten bisher verschiedene Endgeräte nur über entsprechende, jedem Subnetz zugeordnete, separate und physikalisch voneinander getrennte Switches angesteuert werden. Ein derartiger Aufbau ist jedoch besonders kostspielig und umfangreich im Design.

Wie obig bereits erwähnt, ist somit insbesondere auf die Ausgestaltung eines jeden Subnetzwerks mit einem separaten Switch und separaten physikalischen Datenleitungen verzichtet, sodass für das gesamte Netzwerk eine einzige physikalische Struktur angewandt werden kann, wobei diese physikalische Struktur, d. h. Netzwerkarchitektur, nur aufgrund einer logischen, insbesondere auch mathematischen Unterscheidung (d. h. gedacht), aufgetrennt wird.

Dabei bezeichnet die Abkürzung "VLAN-Switch" einen solchen Netzwerkswitch, welcher dazu eingerichtet und dafür vorgesehen ist, ein Netzwerk in Form eines Virtual Local Area Network (VLAN) mit zu betreiben.

Insofern wird somit durch die nunmehr beanspruchten Netzwerksegmente, welche jeweils in Form eines VLAN-Netzwerks ausgebildet sein können, es ermöglicht, dass die Trennung des Netzwerks in mehrere logische Segmente, also die Netzwerksegmente, unterteilt wird.

Anders als bei der physikalischen Trennung durch die Zuordnung zu einem Switch Port werden bei der Trennung durch VLANs die Geräte durch eine VLAN-ID logisch getrennt. Dabei wird der Datenstrom jeder Station mit einer Kennung (dem VLAN-"Tag") versehen. Diese Kennung bestimmt die Zugehörigkeit eines Datenpakets zu einem bestimmten VLAN. Alle Geräte mit der gleichen VLAN-Kennung befinden sich nunmehr in einem logischen Netzwerk.

Insbesondere kann nämlich durch die logische Trennung der einzelnen Netzwerke ein Broadcast eingegrenzt werden. Broadcasts werden nämlich nur an Mitglieder des gleichen VLANS und nicht an alle am Switch hängenden Steuerelemente verteilt.

Dies trägt insofern auch nicht nur zu einer höheren Leistung, sondern auch zu mehr Sicherheit bei, denn der Datenverkehr wird auf weniger Adressaten eingeschränkt. Hinzu kommt, dass Benutzer oder die Steuerelemente in der Regel in einem VLAN keine Möglichkeit haben aus dem zugewiesenen VLAN auszubrechen. Ein Zugriff (oder Angriff) auf einen anderen Rechner, der nicht zum eigenen VLAN gehört kann daher bereits durch den Netzwerkswitch verhindert werden. Wenn eine VLAN übergreifende Kommunikation notwendig ist, können hierfür explizit Routen eingerichtet werden.

Insbesondere wird darauf hingewiesen, dass die hier beschriebene VLAN-Technologie eine solche sein kann, welche an den Industriestandard IEEE 802.1Q angepasst ist und/oder mit diesem kompatibel ist.

Der Standard IEEE 802.1Q ist eine durch das IEEE genormte Priorisierungs- und VLAN-Technologie, die im Unterschied zu den älteren, nur Port-basierten VLANs, paketbasierte tagged-VLANS implementiert. Der Ausdruck "tagged" leitet sich vom englischen Ausdruck "material tags" ab.

Es handelt sich daher bei tagged-VLANS um Netze, die Netzwerkpakete verwenden, welche eine spezielle VLAN-Markierung tragen.

Insbesondere sind nämlich in den 802.1Q-Standard Datenfelder für das V-LAN-tagging definiert, die in dem Datenbereich eines Ethernetpakets eingeführt werden können.

Insofern kann das vorliegende Netzwerk in Form eines Ethernet-Kommunikationssystems ausgebildet sein.

Das hat den Vorteil, dass in der Regel auch bereits vorhandene, ältere Switches solche Pakete weiterleiten können. Das eingefügte Tag besteht in der Regel aus mehreren Feldern, beispielsweise vier Feldern mit einer Gesamtlänge von 32 Bit.

Für die Protokoll-ID werden 2 Byte, für das Prioritätenfeld 3 Bit, für Indikator des Canonicalformats 1 Bit und für VLAN-ID 12 Bit genutzt.

Zur eindeutigen Identifizierung eines VLANS wird jedem VLAN daher zunächst eine eindeutige Nummer zugeordnet. Man nennt diese Nummer VLAN-ID. Ein Erkennungsmodul, das mit der VLAN-ID = 1 ausgestattet ist, kann mit jedem anderen Gerät im gleichen VLAN kommunizieren, nicht jedoch mit einem Gerät in einem anderen VLAN, wie z. B. ID = 2, 3,....

Um zwischen den VLANS zu unterscheiden, wird nach dem Standard IEEE 802.1Q ein Ethernetframe um 4 Byte erweitert. Davon sind 12 Bit zur Aufnahme der VLAN-ID vorgesehen, sodass (ohne Ausnutzung des Canonical Formats) theoretisch 4096-2 = 4094 VLANS möglich sind.

Denkbar ist, dass die einzelnen logischen Netzwerkverbindungen entsprechend eines OPC-Standards, d. h. beispielsweise in Form von OPC UA-Verbindungen, ausgebildet sind. Insbesondere ist nämlich denkbar, dass pro Netzwerksegment über die Steuerungseinrichtung mehrere OPC UA-Endpunkte mit unterschiedlicher IP-Adresse, VLAN-ID und Priorisierung entsprechend des oben genannten Standards IEEE 802.1Q zur Verfügung stehen.

Weist nun ein Netzwerksegment, welches eindeutig, vorzugsweise eineindeutig, eine bestimmte VLAN-ID zugewiesen bekommen hat, eine höhere Priorität auf als ein, nur in logischer Hinsicht, davon unterschiedliches Netzwerksegment einer entsprechend unterschiedlichen VLAN-ID, so können die Steuerungseinrichtung und/oder der VLAN-Switch dazu vorgesehen sein, zunächst den Datenaustausch des höher priorisierten Netzwerksegments zu bevorzugen, um erst nach Abbau der diesem höher priorisierten Netzwerksegment zugeordneten Aufgaben eine Abarbeitung des tiefer priorisierten Netzwerksegments zu erlauben.

Mit anderen Worten gilt generell: Zuordnung und Konfiguration der OPC UA Endpunkte zu einem bestimmten Netzwerksegment entsprechend der VLAN-ID und Zuordnung einer Priorität entsprechend der Priorität des entsprechenden VLANs.

Gemäß zumindest einer Ausführungsform sind jedem Sensor und/oder jeder Verarbeitungseinheit zumindest eine VLAN-ID zugeordnet und jedem Netzwerksegment ist wiederum zumindest eine, beispielsweise genau eine, eindeutig, vorzugsweise eineindeutig, VLAN-ID zugeordnet, wobei über jede der VLAN-IDs zumindest ein Steuerelement ansteuerbar ist. Gemäß zumindest einer Ausführungsform umfasst zumindest eine Vorrichtung zumindest einen Temperatursensor, wobei der Temperatursensor eine Umgebungstemperatur und/oder eine Temperatur eines Sensors misst und an die Verarbeitungseinheit einer Vorrichtung und/oder an die zentrale CPU weiterleitet.

Gemäß zumindest einer Ausführungsform ermittelt die zentrale CPU einen Auslastungsgrad (CPU-Last und/oder Speicherverbrauch) von zumindest einer Verarbeitungseinheit, wobei bei Überschreiten einer Grenztemperatur der Verarbeitungseinheit und/oder zumindest der dieser Verarbeitungseinheit zugeordneten Sensor, diese(r) in seiner Leistung zumindest teilweise gedrosselt oder ganz abgeschaltet wird.

Daneben ist es zusätzlich oder alternativ denkbar, dass die Auswerteinheit(en) in der gleichen Weise wie die Verarbeitungseinheit im Sinne des obigen Netzwerks zueinander kommunizieren und verschaltet sind.

Im Folgenden ist die Erfindung anhand eines Ausführungsbeispiels und der dazugehörigen Figuren näher beschrieben.

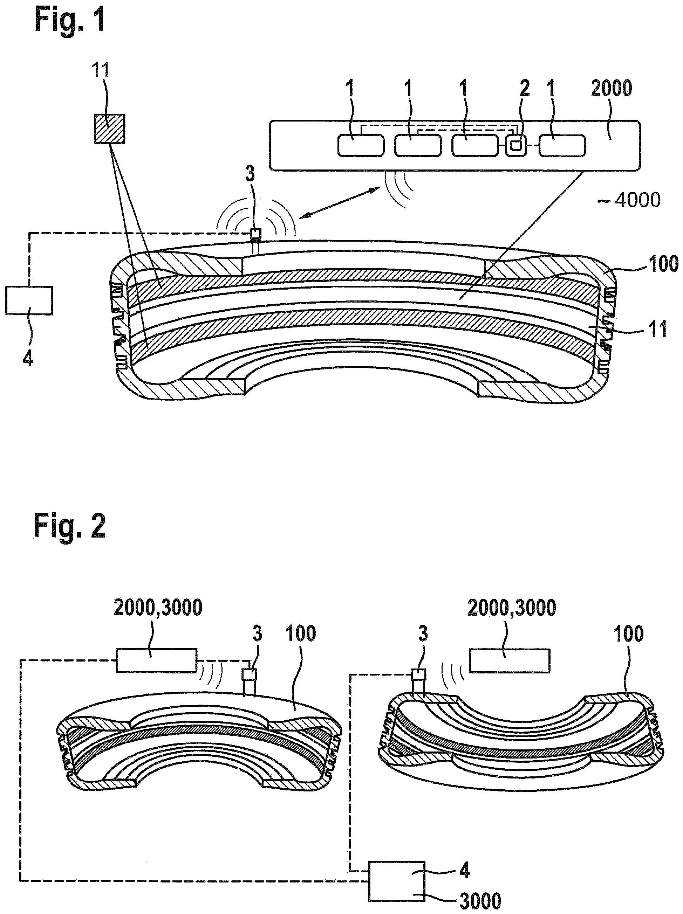

Dabei zeigt die Figur 1 ein Ausführungsbeispiel einer Schnittansicht eines hier vorgeschlagenen Reifens innerhalb dessen die in dieser Anmeldung vorgeschlagenen Anordnungen angeordnet sind.

Die Figur 2 zeigt zwei Reifen, welche an einem Fahrzeug montierbar sind und über die gemeinsame CPU miteinander in Datenkommunikation stehen.

Gleiche oder gleich wirkende Bestandteile sind mit den gleichen Bezugszeichen versehen, auch wenn manche Bezugszeichen oder manche Bestandteile übertrieben groß dargestellt sind.

In der Figur 1 ist wie obig erwähnt, eine Schnittdarstellung eines hier vorgeschlagenen Reifens 100 dargestellt, wobei innerhalb des Reifens 100 ein Sensorsystem 2000 zur Messung und/oder Verarbeitung von Druck- und/oder Feuchtigkeitswerten dargestellt ist.

Erkennbar ist, dass die Sensoranordnung 2000 eine Vielzahl von Sensoren 1 zur Messung von Druck und/oder Feuchtigkeit umfasst, wobei für diese Sensoren 1 eine vorzugsweise einzige Verarbeitungseinheit 2 vorgesehen ist, welche dazu eingerichtet und dafür vorgesehen ist, die Sensoren 1 anzusteuern und/oder von den Sensoren 1 gemessene Daten zu speichern und zu verarbeiten.

Sowohl die Sensoren 1 als auch die Verarbeitungseinheit 2 sind auf einem flexiblen Trägermaterial 11 angeordnet, wobei das Trägermaterial 11 dazu eingerichtet und vorgesehen ist, auf der Oberfläche eines Nutzungsobjekts, vorliegend also auf einer Innenfläche des Reifens 100, angeordnet zu werden.

Entlang der Innenfläche des Reifens 100, also parallel zur Umfangsrichtung des Reifens 100 auf der Innenfläche des Reifens 100, ist das Trägermaterial 11 in Form eines Trägerstreifens ausgebildet, sodass die Sensoren 1 und die Verarbeitungseinheit 2 entlang der Streifenhauptausdehnung hintereinander angeordnet sind.

Den Trägerstreifen, auf welchem die Sensoren 1 und die Verarbeitungseinheit 2 angeordnet sind, bildet in der Figur 1 ein Mittelstreifen, welcher links und rechts daneben von weiteren optionalen Trägerstreifen, welcher in der gleichen Art wir der mittlere Trägerstreifen ausgebildet sein können.

Zudem ist gezeigt, dass ein weiterer optionaler Trägerstreifen auf einer Innenfläche der Seitenwand des Reifens 100 angeordnet sein kann. Auch dieser Trägerstreifen kann in derselben wie oben beschriebenen Art aufgebaut sein. Zum Beispiel ist es möglich, dass auch nur ein einziger Trägerstreifen in Inneren des Reifens 100 auf einer Innenfläche des Reifens 100 angeordnet ist.

Die Sensoranordnung 2000 umfasst eine CPU 4 extern des Reifens 100, beispielsweise in einem Fahrzeuginneren, insbesondere welches als ein Fahrzeugsteuergerät vorgesehen ist, welches insbesondere drahtlos von zumindest einer Auswertungseinheit 3 deren Daten empfängt und verarbeitet.

Zum Beispiel kann die CPU 4 auf Basis der Verarbeitung der Daten feststellen, ob ein Reifeninnendruck ausreichend ist, oder ob bezogen auf einen vergangenen Nutzungszeitraum des Reifens 100 eine Abnutzung des Reifens 100 wahrscheinlich ist. Auch ist denkbar, dass die Daten auch solche Daten umfassen oder nur aus sollten bestehen, welche durch externe auf den Reifen von außen wirkende Kräfte verursacht sind. Insbesondere kann auf Basis eines vergangenen Nutzungszeitraums von der CPU 4 auf Basis, der von der Auswertungseinheit 3 generierten und gelieferten Daten berechnet werden, ob eine vorgegebene Höchstbelastungsdauer des Reifens 100 überschritten ist. Diese Höchstbelastungsdauer kann sich zum Beispiel auf einen solchen vergangenen Zeitraum gemäß den Daten im Hinblick auf eine Drehwinkelgeschwindigkeit und eine Drehbeschleunigung des Reifens 100 und/oder einer auf den Reifen 100 wirkenden Kräfte ergeben.

In der CPU 4 vorab hinterlegt kann eine bestimmte Anzahl von maximal Drehwinkelgeschwindigkeiten und/oder Drehbeschleunigungen oder auf den Reifen 100 wirkende Radialkräfte bezogen auf einen vorgegebenen Nutzungszeitraum sein. Ist eine solche Anzahl überschritten, kann die CPU 4 dem Fahrzeugnutzer anzeigen, dass ein Reifen 100 ausgewechselt werden muss und/oder dass der Reifen 100 mit Druckluft nachgefüllt werden muss.

Des Weiteren ist in der Figur 2 gleichzeitig ein Kontrollsystem 3000 dargestellt, welches in vorliegend zwei Reifen 100 verbaut ist und über eine gemeinsame CPU 4 miteinander in Datenkommunikation steht.

Innerhalb jedes der Reifen 100 ist jeweils eine Sensoranordnung 2000, wie obig beschrieben, verbaut.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Sensor
- 2: Verarbeitungseinheit
- 3: Auswertungseinheit
- 4: CPU
- 11: Trägermaterial
- 100: Reifen
- 2000: Sensoranordnung
- 3000: Kontrollsystem

## Patentansprüche

1. Kontrollsystem (3000) zur Messung und/oder Verarbeitung von gemessenen Druck- und/oder Feuchtigkeitswerten zum Beispiel innerhalb eines Reifens (100), umfassend zumindest einen zumindest teilweise aufgeblasenen Reifen (100), insbesondere einen Fahrzeugreifen,
zumindest ein
Sensorsystem (2000) zur Messung und/oder Verarbeitung von gemessenen Druck- und/oder Feuchtigkeitswerten zum Beispiel im Inneren eines Fahrzeugreifens, umfassend
- zumindest einen Sensor (1) zur Messung von Druck und/oder Feuchtigkeit,
- zumindest einer Verarbeitungseinheit (2), welche dazu eingerichtet und dafür vorgesehen ist den Sensor (1) anzusteuern und/oder von dem Sensor (1) gemessene Daten zu speichern und/oder zu verarbeiten,
- zumindest einer Auswertungseinheit (3), welche die von der Verarbeitungseinheit (2) an sie weitergeleitete Daten auswertet und anschießend diese Daten oder einen aus den Daten generierten Datensatz an eine
- CPU (4), insbesondere drahtlos, weiterleitet, insbesondere wobei es sich bei der CPU (4) um ein Fahrzeugsteuergerät handelt,
**dadurch gekennzeichnet, dass**
zumindest der Sensor (1), vorzugsweise jedoch auch die Verarbeitungseinheit (2), auf einem flexiblen und biegbaren Trägermaterial (11) angeordnet sind, wobei das Trägermaterial (11) dazu eingerichtet und dafür vorgesehen ist auf einer Oberfläche eines Nutzungsobjekts, insbesondere auf der Innenfläche eines Reifens (100), angeordnet zu werden, wobei die Auswertungseinheit (3) eine Drehposition des Sensors (1) relativ zu einer Nullposition des Reifens (100) an die CPU (4) übermittelt.

2. Kontrollsystem (3000) nach Anspruch 1,
**dadurch gekennzeichnet, dass**
es sich bei dem Trägermaterial (11) um einen Textilstoff, insbesondere um einen Webstoff, handelt.

3. Kontrollsystem (3000) nach Anspruch 1 oder 2,
**dadurch gekennzeichnet, dass**
das Trägermaterial (11) in Form eines Trägerstreifens ausgebildet ist, sodass der Sensor (1) und die Verarbeitungseinheit (2) entlang der Streifenhauptausdehnung hintereinander angeordnet sind.

4. Kontrollsystem (3000) zur Messung und/oder Verarbeitung von gemessenen Druck- und/oder Feuchtigkeitswerten zum Beispiel im Inneren eines Fahrzeugreifes, umfassend
- zumindest einen Sensor (1) zur Messung von Druck und/oder Feuchtigkeit,
- zumindest einer Verarbeitungseinheit (2), welche dazu eingerichtet und dafür vorgesehen ist den Sensor (1) anzusteuern und/oder von dem Sensor gemessene Daten zu speichern und/oder zu verarbeiten,
**dadurch gekennzeichnet, dass**
zumindest der Sensor (1), vorzugsweise jedoch auch die Verarbeitungseinheit (2), auf einem flexiblen und biegbaren Trägermaterial (11) angeordnet sind, wobei das Trägermaterial (11) dazu eingerichtet und dafür vorgesehen ist auf der Oberfläche eines Nutzungsobjekts, insbesondere auf der Innenfläche eines Reifens (100), angeordnet zu werden.
Kontrollsystem (3000) nach zumindest einem der vorhergehenden Ansprüche, umfassend zumindest ein Reifenventil, welches ein Teil des Reifens (100) ist, wobei die Auswertungseinheit (3) an oder in das Reifenventil integriert verbaut ist.
Kontrollsystem (3000) nach Anspruch 1,
**dadurch gekennzeichnet, dass**
wobei jede Drehposition jedes Sensors (1) an die CPU (4) übermittelt wird, sodass die CPU (4) zeitkontinuierlich oder zeitdiskret eine relative Position der Reifen (100) untereinander erfasst und/oder eine Drehwinkelgeschwindigkeit, eine Drehbeschleunigung des Reifens (100) und/oder eine auf den Reifen (100) wirkende radiale Kraft erfasst.
